# EUROPEAN PATENT SPECIFICATION

(11) **EP 1 878 785 B1**
(45) Date of publication and mention of the grant of the patent: **09.04.2014**
(21) Application number: 06714410.5
(22) Date of filing: 23.02.2006
(51) Int. Cl.: C10M 169/02, C10M 107/38, C10M 113/02, C10M 113/12, C10M 115/08, C10M 119/22, C10M 129/52, F16C 33/66, C10N 10/02, C10N 30/08, C10N 40/02, C10N 50/10

(54) **GREASE COMPOSITION AND BEARING**
SCHMIERFETTZUSAMMENSETZUNG UND LAGER
COMPOSITION DE GRAISSE ET PALIER

(30) Priority: 23.02.2005 JP 2005047335
(43) Date of publication of application: 16.01.2008
(73) Proprietor: Kyodo Yushi Co., Ltd., Tokyo 104-0061 (JP)
(72) Inventor: OHNUKI, Yuji, Fujisawa-shi, Kanagawa, 2518588 (JP); ENDO, Toshiaki, Fujisawa-shi, Kanagawa, 2518588 (JP)
(74) Representative: Vossius & Partner
(86) International application number: PCT/JP2006/303270
(87) International publication number: WO 2006/090779

(56) References cited:
- JP-A- 06 200 273
- JP-A- 11 246 886
- JP-A- 63 235 398
- JP-A- 2004 099 847
- JP-A- 2004 125 165
- US-B1- 6 548 454

## Description

### Field of the invention

This invention relates to a grease composition, more particularly, the use of the grease composition for a ball bearing and a bearing in combination with the grease composition.

### Background art

As bearings used at elevated temperature, there have been known, for example, ball bearings for electrical components whose lubricated portions are directly connected to or placed near engines that are heat elements in automobile industry; ball bearings used at high speed and high temperature for electrical home appliances such as vacuum cleaner motor in electric industry; ball bearings lubricated at high temperature for continuous casting equipment in iron industry; ball bearings for corrugating machine in paper industry; and ball bearings for heat roller of copy machine in business machine.

Grease compositions filled and used in these bearings include various greases for ball bearings used at high temperature. For example, greases comprising good heat resistant diurea compound thickener and synthetic lubricating base oil are used in ball bearings used at high temperature for automobile electric components such as alternator, electromagnetic clutch for car air-conditioner, idler pulley, intermediate pulley, electric fan motor, fluid coupling, water pump, distributor, starter one-way clutch (Patent Document 1). Recently however, there is a tendency that the temperature at which bearings are used rises and sometimes to around 200°C. In such a case, conventional greases comprising heat resistant diurea compound thickener and synthetic lubricating base oil cause seizure of ball bearings in short period of time but do not provide sufficient performance.

On the other hand, so-called fluorine greases comprising polytetrafluoroethylene thickener and perfluoropolyether base oil are used for other high temperature ball bearings (Patent Document 2). However, these fluorine greases also do not always provide sufficient lifetime at high temperature.

In addition, these automobile electric components are often fixed on underside of engine room which is often exposed to rain water while running. Accordingly, greases filled in these ball bearings are required to have high rust resistance. Generally, a rust inhibitor is added to greases to provide rust resistance. Inorganic passivating agents such as sodium nitrite are often used as an effective rust inhibitor for fluorine greases for high temperature ball bearings. However, it is known that sodium nitrite reacts with a secondary amine under acidic conditions to form N-nitrosoamine which increases environmental load. Therefore, there is a need for a rust inhibitor which can be substituted for sodium nitrite.

Patent Document 3 describes a rolling apparatus comprising: a movable member which can undergo rotary or linear motion, a support member which carries the movable member, rolling elements which are interposed between the movable member and the support member and which roll with the movement of the movable member, and a lubricant composition which is disposed between the movable member on which the rolling elements roll and the support member, wherein the lubricant composition is a mixture of a thickening agent which is at least one selected from the group consisting of a solid fluoropolymer, a lamellar mineral powder, an ultrafinely particulate organic material, an organic solid lubricant and an ultrafinely particulate inorganic material, and a base oil comprising a liquid fluorinated polymer oil.
Patent Document 1: Japanese Patent No.2764724
Patent Document 2: Japanese Patent No.3.572987
Patent Document 3: United States Patent No. 6, 548, 454

### Summary of the invention

An object of the invention is to provide a new grease composition.

Another object of the invention is to provide a grease composition which can give sufficient lifetime even at high temperature when it is used in combination with a ball bearing.

Still another object of the invention is to provide a bearing, in particular a ball bearing in combination with the above grease composition.

The invention provides the following grease composition.
1. A grease composition comprising perfluoropolyether as a base oil and a melamine cyanurate as a thickener in an amount of 10 to 30% by mass based on the total mass of the grease composition.
2. The grease composition of the item 1 which further comprises as a thickener at least one member selected from the group consisting of polytetrafluoroethylene, carbon black and aerosil.
4. The grease composition of any one of the items 1 to 3 which further comprises a rust inhibitor selected from the group consisting of carboxylic acids, carboxylic acid salts, sulfonic acid salts, amine and esters.
5. The grease composition of the item 3 wherein the rust inhibitor is sodium sebacate.
6. Use of the grease composition of any one of the items 1 to 4 for a ball bearing.
7. A ball bearing in combination with the grease composition of any one of the items 1 to 4.

### Effects of the invention

The grease composition of the invention is a so-called fluorine grease which comprises perfluoropolyether as a base oil, wherein a melamine cyanurate is used as a thickener. Therefore, if it is included in a bearing used under high temperature and severe lubricating conditions, it is possible to remarkably prolong the lifetime of the bearing. If the grease composition further comprises a rust inhibitor, it is possible to remarkably prolong the lifetime of a bearing for automobile electric components. In particular, if sodium sebacate is used as a rust inhibitor, the grease composition brings out long lifetime and excellent rust inhibition without causing any adverse effect to human body or environment.

### Best modes for carrying out the invention

The base oil used in the invention comprises as an essential component perfluoropolyether oil.

Specific examples of the perfluoropolyether oils include those represented by the following formulas.

(CF₂ CF₂ CF₂ O)n (1)

Average molecular weight: 1900 to 8400

(CF₂ CF₂ O)m(CF₂ O)n (2)

Average molecular weight: 4000 to 13000

(CF(CF₃)CF₂ O)m(CF₂ O)n (3)

Average molecular weight: 1500 to 7250

(CF(CF₃)CF₂O)n (4)

Average molecular weight: 1850 to 8250

The amount of the perfluoropolyether oil in the base oil is preferably at least 80% by mass, more preferably at least 90% by mass, and most preferably 100% by mass. If the amount of the perfluoropolyether oil in the base oil is less than 80% by mass, there is a tendency to poor heat resistance of the base oil, seizure of bearing in shorter period and insufficient performance.

The base oil used in the invention may include other oils in addition to perfluoropolyether oil. Examples of such oils include mineral oils; various synthetic oils such as synthetic ester oils such as diesters and polyol esters; synthetic hydrocarbon oils such as poly-alpha-olefin and polybutene; synthetic ether oils such as alkyl diphenyl ether and polypropylene glycol; silicone oils; and fluorinated oils.

Melamine cyanurate used in the invention is an organic adduct of melamine and isocyanuric acid (about 1 : 1) which is white powder and commercially available as high crystalline substance having a primary particle size of 0.5 to 5 microns. Melamine cyanurate has high heat resistance and is stable for a long time even at 300°C. Melamine cyanurate shows excellent load bearing characteristics in sliding portions of metal materials and wear prevention effects. Similarly, it shows excellent lubricating effects to soft materials such as resins without promoting friction or wear.

Molybdenum disulfide or graphite has been used in lubricants used in heavy industry such as iron, shipbuilding, and cement to meet requests for high temperature, low speed and high load. However, from the point of view of prevention of contamination of working environment or products, white products are more and more demanded and melamine cyanurate has widely been used as a solid lubricant which can be substituted for molybdenum disulfide or graphite. The forms of usage of melamine cyanurate as a solid lubricant are mainly grease, paste or dry film.

As melamine cyanurate has been used in a grease as an additive to improve load bearing characteristics in sliding portions of metal materials, the amount of melamine cyanurate in the grease is typically 1 to 3% by mass and at most 5% by mass.

Moreover, it has not been known that melamine cyanurate is used as a thickener in a grease and therefore, there has been no report or disclosure which suggests that a grease comprising melamine cyanurate as a thickener can significantly prolong lifetime of a ball bearing used at high temperature.

The invention is characterized by the use of melamine cyanurate as a thickener. The amount of melamine cyanurate in a grease composition of the invention is 10 to 30% by mass, preferably 15 to 30% by mass, and most preferably 15 to 25% by mass.

If the amount of melamine cyanurate is less than 10% by mass, there is no sufficient thickening ability and the grease tends to leak out from a bearing which results in short lifetime of the bearing. If the amount is more than 30% by mass, agitation resistance by the grease tends to become high and cause heat generation which results in decrease of lifetime of the grease.

The thickener of the grease composition of the invention comprises melamine cyanurate as an essential component but other thickeners may optionally be used. Examples of other thickeners include metal soap thickener such as Na, Ca, Li, Al, or Ba soap thickener; and non-metal soap thickeners such as carbon black, aerosil, bentonite, terephthalamate, urea, phthalocyanine, and polytetrafluoroethylene.

The amount of melamine cyanurate based on the total amount of the thickener in the grease composition of the invention is preferably at least 50% by mass, more preferably 60% by mass, most preferably 70 to 100% by mass.

The grease composition of the invention preferably comprises a rust inhibitor. Examples of preferred rust inhibitors include known carboxylic acids, carboxylic acid salts, sulfonic acid salts, amines and esters, more preferably carboxylic acids and carboxylic acid salts such as fatty acids, dibasic acids, naphthenic acid, lanolin fatty acids, alkenyl succinic acids, alkenyl succinic acid derivatives, and salts thereof. Most preferred is dibasic carboxylic acid salts such as sodium sebacate.

The amount of a rust inhibitor in the grease composition of the invention is preferably at least 1% by mass, more preferably 2 to 10% by mass, still more preferably 3 to 10% by mass, and most preferably 4 to 10% by mass. If the amount is less than 1% by mass, rust inhibitory effect may not be sufficient, while if it is more than 10% by mass, agitation resistance by the grease tends to become high and cause heat generation which results in decrease of lifetime of the grease.

The grease composition of the invention may optionally include other conventional additives such as antioxidant, metal corrosion inhibitor, oily agent, antiwear agent, extreme pressure agent, and solid lubricant.

The grease composition of the invention can be used for various applications and suitably used for lubrication of portions exposed to high temperature. Most preferred usage form of the grease composition of the invention is a bearing, in particular a high temperature ball bearing.

Examples of parts wherein such bearing is used include automobile electric components such as alternator, electromagnetic clutch for car air conditioner, idler pulley, intermediate pulley, electric fan motor, fluid coupling, water pump, distributor and starter one-way clutch.

### Examples and comparative examples

Thickeners, base oils and additives listed in Tables 1 and 2 were mixed in mass ratio as specified in Tables 1 and 2 and kneaded by three-roll mill to prepare grease compositions. The grease compositions thus prepared were evaluated by the following test methods. The results are shown in Tables 1 and 2.

### Bearing lubrication lifetime test (ASTM D 3336mod.)

Sample grease (3.6g) was filled in Bearing 6204 and both sides were caulked by steel shield plates. The outer ring of the bearing was maintained at 200°C, and continuous running of the inner ring was conducted under the load of Fa=Fr=67N at 10000rpm until the rotary torque became too much to generate overcurrent of greater than 4 ampere or until the temperature of the bearing rose 15°C or more, whichever is shorter was taken as bearing lubrication lifetime (unit: hour).
Penetration:JIS K2220 7.
Rust inhibition: Emcor rust inhibition tester (IP220)

**Table 1**

| | | Example | | | | |
|---|---|---|---|---|---|---|
| | | 1 | 2 | 3 | 4 | 5 |
| Base oil 1 | perfluoropolyether oil (*1) | 75 | 75 | 74 | 74 | 55 |
| Base oil 2 | perfluoropolyether oil (*2) | - | - | - | - | 19 |
| Thickener 1 | melamine cyanurate (*3) | 25 | 20 | 21 | 16 | 16 |
| Thickener 2 | PTFE(*4) | - | - | 5 | 5 | 5 |
| Rust inhibitor 1 | sodium sebacate (*5) | - | 5 | - | 5 | 5 |
| Rust inhibitor 2 | sodium nitrite (6*) | - | - | - | - | - |
| Penetration | | 280 | 280 | 280 | 280 | 280 |
| Bearing lubrication lifetime | | 6000< | 6000< | 6000< | 6000< | 6000< |
| Emcor | | 5 | 0 | 5 | 0 | 0 |

**Table 2**

| | | Comparative Example | | | | |
|---|---|---|---|---|---|---|
| | | 1 | 2 | 3 | 4 | 5 |
| Base oil 1 | perfluoropolyether oil (*1) | 78 | 73 | 73 | 95 | 75 |
| Base oil 2 | perfluoropolyether oil (*2) | - | - | - | - - | - |
| Thickener 1 | melamine cyanurate (*3) | - | - | - | 5 | 5 |
| Thickener 2 | PTFE (*4) | 22 | 22 | 22 | - | 20 |
| Rust inhibitor 1 | sodium sebacate (*5) | - | 5 | - | - | - |
| Rust inhibitor 1 | sodium nitrite (6*) | - | - | 5 | - | - |
| Penetration | | 280 | 280 | 280 | 400< | 280 |
| Bearing lubrication lifetime | | 700 | 700 | 300 | - | 900 |
| Emcor | | 5 | 0 | 0 | - | 5 |

| | | | | | | |
|---|---|---|---|---|---|---|
| (*1): Average molecular weight of 4100 of the formula (3) (*2): Average molecular weight of 8000 of the formula (2) (*3): MCA available from Mitsubishi Chemical (*4): PTFE: polytetrafluoroethylene (LUBRON L-5F available from Daikin Industries, Ltd.) (*5): available from Hokoku Corporation (*6): available from Mitsubishi Chemical | | | | | | |

The results show that the grease compositions of Examples 1 and 2 wherein melamine cyanurate was used as a thickener and perfluoropolyether oil was used as a base oil have much longer bearing lubricating lifetime than that of Comparative Example 1 wherein polytetrafluoroethylene was used as a thickener and melamine cyanurate was not included. In addition, the composition of Comparative Example 4 wherein the amount of melamine cyanurate was 5% by mass had too high penetration so that it could not be used as a grease.

## Claims

1. A grease composition comprising perfluoropolyether as a base oil and a melamine cyanurate as a thickener in an amount of 10 to 30 % by mass based on the total mass of the grease composition.

2. The grease composition of claim 1 which further comprises as a thickener at least one member selected from the group consisting of polytetrafluoroethylene, carbon black and aerosil.

3. The grease composition of claims 1 or 2 which further comprises a rust inhibitor selected from the group consisting of carboxylic acids, carboxylic acid salts, sulfonic acid salts, amines and esters.

4. The grease composition of claim 3 wherein the rust inhibitor is sodium sebacate.

5. Use of the grease composition of any one of claims 1 to 4 for a ball bearing.

6. A ball bearing in combination with the grease composition of any one of claims 1 to 4.

## Patentansprüche

1. Eine Schmiermittelzusammensetzung, umfassend Perfluorpolyether als ein Basisöl und ein Melamincyanurat als ein Verdickungsmittel in einer Menge von 10 bis 30 Massen%, bezogen auf die Gesamtmasse der Schmiermittelzusammensetzung.

2. Die Schmiermittelzusammensetzung nach Anspruch 1, welche außerdem als ein Verdickungsmittel mindestens eine Komponente, ausgewählt aus der Gruppe bestehend aus Polytetrafluorethylen, Ruß und Aerosil, umfasst.

3. Die Schmiermittelzusammensetzung nach den Ansprüchen 1 oder 2, welche außerdem einen Rosthemmer, ausgewählt aus der Gruppe bestehend aus Carbonsäuren, Carbonsäuresalzen, Sulfonsäuresalzen, Aminen und Estern, umfasst.

4. Die Schmiermittelzusammensetzung nach Anspruch 3, wobei der Rosthemmer Natriumsebacat ist.

5. Verwendung der Schmiermittelzusammensetzung nach einem der Ansprüche 1 bis 4 für ein Kugellager.

6. Ein Kugellager in Kombination mit der Schmiermittelzusammensetzung nach einem der Ansprüche 1 bis 4.

## Revendications

1. Composition de graisse comprenant du perfluoropolyéther comme huile de base et un cyanurate de mélamine comme épaississant dans une quantité de 10 à 30 % en masse rapporté à la masse totale de la composition de graisse.

2. Composition de graisse selon la revendication 1 qui comprend de plus comme épaississant au moins un élément choisi dans le groupe constitué de polytétrafluoroéthylène, de noir de carbone et d'aérosil.

3. Composition de graisse selon les revendications 1 ou 2, laquelle comprend de plus un inhibiteur de rouille choisi dans le groupe constitué d'acides carboxyliques, de sels d'acides carboxyliques, de sels d'acides sulfoniques, d'amines et d'esters.

4. Composition de graisse selon la revendication 3, dans laquelle l'inhibiteur de rouille est le sébaçate de sodium.

5. Utilisation de la composition de graisse selon l'une quelconque des revendications 1 à 4 pour un roulement à billes.

6. Roulement à billes en combinaison avec la composition de graisse selon l'une quelconque des revendications 1 à 4.
